# EUROPÄISCHE PATENTSCHRIFT

(11) **EP 3 656 170 B1**
(45) Veröffentlichungstag und Bekanntmachung des Hinweises auf die Patenterteilung: **24.11.2021**
(21) Anmeldenummer: 18731777.1
(22) Anmeldetag: 11.06.2018
(51) Int. Cl.: H04W 4/44, H04W 72/12, H04W 16/14, H04W 76/14, H04W 74/08, H04W 88/04

(54) **VERFAHREN ZUM BETREIBEN EINER NETZWERKINFRASTRUKTURSEITIGEN NETZWERKEINHEIT, NETZWERKINFRASTRUKTURSEITIGE NETZWERKEINHEITEN, VERFAHREN ZUM BETREIBEN EINER STRASSENSEITIGEN NETZWERKEINHEIT, STRASSENSEITIGE NETZWERKEINHEIT**
METHOD FOR OPERATING A NETWORK INFRASTRUCTURE-END NETWORK UNIT, NETWORK INFRASTRUCTURE-END NETWORK UNITS, METHOD FOR OPERATING A ROAD-END NETWORK UNIT, ROAD-END NETWORK UNIT
PROCÉDÉ POUR FAIRE FONCTIONNER UNE UNITÉ DE RÉSEAU CÔTÉ INFRASTRUCTURE DE RÉSEAU, UNITÉS DE RÉSEAU CÔTÉ INFRASTRUCTURE DE RÉSEAU, PROCÉDÉ POUR FAIRE FONCTIONNER UNE UNITÉ DE RÉSEAU CÔTÉ ROUTE, UNITÉ DE RÉSEAU CÔTÉ ROUTE

(30) Priorität: 18.07.2017 DE 102017212243; 13.10.2017 DE 102017218318
(43) Veröffentlichungstag der Anmeldung: 27.05.2020
(60) Teilanmeldung: 20192134.3
(73) Patentinhaber: Robert Bosch GmbH, 70442 Stuttgart (DE)
(72) Erfinder: BRAHMI, Nadia, 31139 Hildesheim (DE)
(86) Internationale Anmeldenummer: PCT/EP2018/065283
(87) Internationale Veröffentlichungsnummer: WO 2019/015869

(56) Entgegenhaltungen:
- EP-A1- 3 171 650
- WO-A1-2007/018697
- US-A1- 2014 362 780
- US-A1- 2015 334 643
- US-A1- 2017 099 624
- INTEL CORPORATION: "LTE-V2V coexistence with DSRC technology", 3GPP DRAFT; R1-1611924 INTEL - V2V DSRC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , Bd. RAN WG1, Nr. Reno, USA; 20161114 - 20161118 6. November 2016 (2016-11-06), XP051190736, Gefunden im Internet: URL:http://www.3gpp.org/ftp/tsg_ran/WG1_RL 1/TSGR1_87/Docs/ [gefunden am 2016-11-06]
- CAO XIANGHUI ET AL: "On Optimal Device-to-Device Resource Allocation for Minimizing End-to-End Delay in VANETs", IEEE TRANSACTIONS ON VEHICULAR TECHNOLOGY, IEEE SERVICE CENTER, PISCATAWAY, NJ, US, Bd. 65, Nr. 10, 1. Oktober 2016 (2016-10-01), Seiten 7905-7916, XP011625784, ISSN: 0018-9545, DOI: 10.1109/TVT.2016.2538791 [gefunden am 2016-10-13]

## Beschreibung

### Stand der Technik

Die Erfindung betrifft ein Verfahren zum Betreiben einer netzwerkinfrastrukurseitigen Netzwerkeinheit, eine netzwerkinfrastrukurseitige Netzwerkeinheit, ein Verfahren zum Betreiben einer straßenseitigen Netzwerkeinheit sowie eine straßenseitige Netzwerkeinheit.

Bei einem aus der US 2014/0362780 A1 bekannten Verfahren kann über ein lizenziertes Spektrum ein Uplink-Grant empfangen werden. Als Reaktion auf den Uplink-Grant kann eine Bewertung des Clear Channel Assessment (CCA) durchgeführt werden, um die Verfügbarkeit eines nicht lizenzierten Spektrums zu bestimmen. Das CCA kann vor einer mit dem Uplink-Grant verbundenen Übertragung durchgeführt werden. Bei einer anderen Methode können Scheduling-Informationen über ein lizenziertes Spektrum empfangen werden. Ein Uplink-Grant kann über das lizenzierte Spektrum übertragen werden. Der Uplink-Grant kann zumindest teilweise auf den Scheduling-Informationen basieren. Der Uplink-Grant kann so konfiguriert werden, dass ein CCA ausgelöst wird, um die Verfügbarkeit eines nicht lizenzierten Spektrums vor einer mit dem Uplink-Grant verbundenen Übertragung zu bestimmen. Weitere Beispiele des Stands der Technik sind bei den folgenden Dokumenten auffindbar: INTEL CORPORATION: "LTE-V2V coexistence with DSRC technology"; US 2017/099624 A1 (BAGHEL SUDHIR KUMAR [US] ET AL) 6. April 2017; CAO XIANGHUI ET AL: "On Optimal Device-to-Device Resource Allocation for Minimizing End-to-End Delay in VANETs",IEEE TRANSACTIONS ON VEHICULAR TECHNOLOGY.

Es ist bekannt, dass bereits heute Fahrzeuge in der Lage sind, Informationen mit anderen Fahrzeugen in deren Nähe (V2V: Vehicle to Vehicle) auszutauschen. Auch können Fahrzeuge mit straßenseitiger Infrastruktur drahtlos kommunizieren (V2I: Vehicle to Infrastructure). Ebenso kann das Fahrzeug mit einem Backend-Server im Internet (V2N: Vehicle to Network) oder mit einem Fußgänger-Endgerät (V2P: Vehicle to Person) drahtlos kommunizieren. Diese Kommunikation wird insgesamt auch als Vehicle-to-Everything (V2X) bezeichnet.

Die Entwicklung neuer Funktionen und Dienstleistungen in der Automobilindustrie wie beispielsweise automatisiertes Fahren profitiert von V2X. Verkehrssicherheit, Fahrkomfort und Energieeffizienz können verbessert werden. Dies führt zu neuen Produkten und Geschäftsmodellen für Autohersteller, Automobilzulieferer und andere Dienstleister.

Die erste Generation der V2X-Anwendungen, die in den kommenden Jahren eingesetzt werden soll, ist hauptsächlich auf die Anwendung auf der Straße bezogen. Ihr Ziel ist es, dem Fahrer Informationen über das Straßenumfeld bereitszustellen. Fahrzeuge stellen periodisch Statusinformationen (z. B. Position, Geschwindigkeit, Beschleunigung usw.) und/oder Ereignisinformation (Rettungseinsatz, liegen gebliebenes Fahrzeug, Stau) bereit. Diese Informationen werden in der Regel in Form von Kurzmitteilungen lokal abgesetzt. Von benachbarten Fahrzeugen kann diese ereignisbasierte Information an eine zentrale Netzwerkeinheit (Basisstation, Backend) geschickt werden.

Für V2X Direct Device-to-Device (D2D) Kommunikation gibt es derzeit zwei konkurrierende Technologien. Die erste Technologie basiert funktechnisch auf dem IEEE802.11p Standard, welcher die Basis für die übergreifenden Standards DSRC (Dedicated Short Range Communication) in den USA und ETSI ITS G5 (ETSI: European Telecommunications Standards Institute; ITS: Intelligent Transport Systems) in Europa bildet. Die zweite Technologie basiert auf 3GPP (3rd Generation Partnership Project) LTE (Long Term Evolution) und ist auch unter dem Kürzel LTE-V2X bekannt. Eine Weiterentwicklung der LTE-V2X-Technologie wird mit 5G (5th generation mobile networks) erwartet.

Der IEEE 802.11p-Standard verwendet die PHY-Schicht des IEEE 802.11a-Standards auf der Grundlage von Orthogonal Frequency Division Multiplexing (OFDM) mit einigen Modifikationen. Die MAC-Schicht basiert auf dem Enhanced Distributed Channel Access (EDCA), welcher konkurrenzbasiert ist. Des Weiteren wird Carrier Sense Multiple Access (CSMA) mit Collision Avoidance (CSMA / CA) verwendet. CSMA / CA folgt dem Listen-Before-Talk-Prinzip, um Kollisionen auf dem Kanal zu minimieren. Wenn eine Netzwerkeinheit (in diesem Zusammenhang ein Fahrzeug) Daten zu übermitteln hat, führt diese eine Kanalmessung durch, um zu überprüfen, ob der Kanal besetzt ist. Wenn der Kanal als leer wahrgenommen wird, wartet die Netzwerkeinheit mit der geplanten Übertragung eine zufallsermittelte Zeit ab und beginnt dann mit der Übertragung. Wenn der Kanal während der Kanalmessung belegt ist, so wird die Netzwerkeinheit eine Backoff-Prozedur durchführen, d. h. sie wartet mit dem nächsten Kanalzugriff eine zufallsermittelte Zeitperiode ab. Je höher die Anzahl der Netzwerkeinheiten ist, die in einem geografischen Gebiet zu senden versuchen, desto höher ist die Wahrscheinlichkeit, dass eine Netzwerkeinheit ihre Übertragung verzögert, was zu insgesamt erhöhten Verzögerungen im Netzwerk führt. Der IEEE 802.11p-Standard bietet gegenüber anderen WLAN-Standards auf Basis von IEEE 802.11 Vorteile in Bezug auf Latenz und Signalisierungsaufwand und ist auf den Anwendungsfall V2V angepasst.

Die LTE-Erweiterung für V2X ab dem 3GPP Release 14 schlägt vor, ein lizenziertes und/oder ein nicht lizenziertes Spektrum für die Kommunikation zu nutzen. Die V2V-Kommunikation basiert auf einer direkten Device-to-Device-Schnittstelle (auch als Sidelink-Schnittstelle an der physikalischen Schicht bezeichnet). Im Gegensatz zu 802.11p geschieht die Übertragung zellgestützt, d. h. durch das Netzwerk geplant durchführt. Übertragungsrechte werden von einer Scheduler-Einheit, die sich in der Basisstation befindet, erteilt, sodass Kollisionen vermieden und Störungen minimiert werden. Die Kontrolle durch die Basisstation kann nur in Bereichen durchgeführt werden, in denen das Basisstationsignal verfügbar ist (in-coverage). In einem Fall, in dem kein Basisstationssignal zur Verfügung steht (out-of-coverage), findet die Kommunikation mit vordefinierten Parametern über den Sidlink statt.

Die 5G Automotive Association (5GAA) möchte das 5,9 GHz ITS-Frequenzspektrum, auf dem auch die ITS-G5-Systeme arbeiten, verwenden. Dies stellt eine Bedrohung für die Zukunft der ITS-G5-Systeme und deren Einsatz dar, da einige Automobilhersteller ihre Pläne bereits angekündigt haben, ITS-G5-basierte Systeme in ihrem Autos zu verbauen. Damit würden zwei unterschiedliche Drahtloskommunikationssysteme im gleichen nicht lizenzierten Frequenzbereich senden und es ergäben sich Leistungsverschlechterungen für beide Technologien.

Mithin könnte man eine objektive technische Aufgabe dahingehend formulieren, als dass ein Koexistenzmechanismus für die zwei unterschiedliche Drahtloskommunikationstechnologien zu schaffen ist, um vorhandene Ressourcen fair aufzuteilen.

### Offenbarung der Erfindung

Das der Erfindung zugrunde liegende Problem wird durch ein Verfahren zum Betreiben einer netzwerkinfrastrukturseitigen Netzwerkeinheit nach dem Anspruch 1, eine netzwerkinfrastrukturseitige Netzwerkeinheit nach einem nebengeordnetenen Anspruch, ein Verfahren zum Betreiben einer straßenseitigen Netzwerkeinheit nach einem nebengeordneten Anspruch und eine straßenseitige Netzwerkeinheit nach einem nebengeordneten Anspruch gelöst.

Gemäß einem ersten und zweiten Aspekt wird ein Verfahren zum Betreiben einer einer netzwerkinfrastrukturseitigen Netzwerkeinheit sowie eine netzwerkinfrastrukturseitige Netzwerkeinheit vorgeschlagen. Es wird eine Scheduling-Request-Nachricht für den ersten Sidelink-Kanal in dem nicht-lizenzierten Frequenzbereich auf dem Uplink-Kanal von einer der straßenseitigen Netzwerkeinheit empfangen. Es wird eine ersten Scheduling-Grant-Nachricht ermittelt, wobei die erste Scheduling-Grant-Nachricht eine Zuweisung zumindest einer Sidelink-Ressource des ersten Sidelink-Kanals zu der straßenseitigen Netzwerkeinheit umfasst. Es wird die ersten Scheduling-Grant-Nachricht auf dem Downlink-Kanal an die straßenseitige Netzwerkeinheit versendet. Es wird eine Indikation, dass die zugewiesene Sidelink-Ressource des ersten Sidelink-Kanals belegt ist, auf dem Uplink-Kanal von der straßenseitigen Netzwerkeinheit empfangen. Es wird eine zweite Scheduling-Grant-Nachricht ermittelt, wobei die zweite Scheduling-Grant-Nachricht eine Zuweisung zumindest einer Sidelink-Ressource des zweiten Sidelink-Kanals in dem lizenzierten Frequenzbereich zu der straßenseitigen Netzwerkeinheit umfasst. Es wird die zweite Scheduling-Grant-Nachricht auf dem Downlink-Kanal an die straßenseitige Netzwerkeinheit versendet.

Gemäß einem dritten und vierten Aspekt wird ein Verfahren zum Betreiben einer straßenseitigen Netzwerkeinheit sowie eine straßenseitige Netzwerkeinheit vorgeschlagen. Es wird eine Nachricht zum Versand an eine weitere straßenseitige Netzwerkeinheit ermittelt. Es wird eine Scheduling-Request-Nachricht für einen ersten Sidelink-Kanal in einem nicht-lizenzierten Frequenzbereich auf dem Uplink-Kanal an eine netzwerkinfrastrukturseitige Netzwerkeinheit versandt. Es wird eine erste Scheduling-Grant-Nachricht auf dem Downlink-Kanal von der netzwerkinfrastrukturseitigen Netzwerkeinheit empfangen, wobei die erste Scheduling-Grant-Nachricht eine Zuweisung zumindest einer Sidelink-Ressource des ersten Sidelink-Kanals zu der straßenseitigen Netzwerkeinheit umfasst. Es wird ermittelt, dass die zugewiesene Sidelink-Ressource des ersten Sidelink-Kanals belegt ist. Es wird eine Indikation, dass die zugewiesene Sidelink-Ressource des ersten Sidelink-Kanals belegt ist, auf dem Uplink Kanal an die netzwerkinfrastrukturseitige Netzwerkeinheit versendet. Es wird eine zweite Scheduling-Grant-Nachricht auf dem Downlink-Kanal von der netzwerkinfrastrukturseitigen Netzwerkeinheit empfangen, wobei die zweite Scheduling-Grant-Nachricht eine Zuweisung zumindest einer Sidelink-Ressource des zweiten Sidelink-Kanals zu der straßenseitigen Netzwerkeinheit umfasst. Es wird die Nachricht an die weitere straßenseitige Netzwerkeinheit auf dem zweiten Sidelink-Kanal versendet.

Vorteilhaft wird gemäß dem ersten bis vierten Aspekt die Zuverlässigkeit einer Übertragung einer Nachricht über einen Sidelink-Kanal gewährleistet, da der zweite Sidelink-Kanal als Backup-Kanal für den ersten Sidelink-Kanal genutzt wird. Gleichzeitig wird der zweite Sidelink-Kanal als Backup-Kanal nur dann verwendet, wenn der erste Sidelink-Kanal belegt ist. Dadurch wird sichergestellt, dass zunächst versucht wird, den ersten Sidelink-Kanal mit Datenverkehr zu beauschlagen, bevor er zweite Sidelink-Kanal im lizenzierten Frequenzbereich verwendet wird. Somit wird vorteilhaft der günstige erste Sidelink-Kanal bevorzugt verwendet und gleichzeitig über den zweiten Sidelink-Kanal die Zustellung einer Nachricht sichergestellt, sollten Kollisionen auf dem ersten Sidelink-Kanal auftreten.

Gemäß einem fünften und sechsten Aspekt wird ein Verfahren zum Betreiben einer netzwerkinfrastrukturseitigen Netzwerkeinheit sowie eine netzwerkinfrastrukturseitige Netzwerkeinheit vorgeschlagen. Es wird eine erste Gruppe von straßenseitigen Netzwerkeinheiten innerhalb der Zelle der netzwerkinfrastrukturseitigen Netzwerkeinheit ermittelt. Es wird eine zweite Gruppe von straßenseitigen Netzwerkeinheiten innerhalb der Zelle der netzwerkinfrastrukturseitigen Netzwerkeinheit ermittelt, wobei die erste und die zweite Gruppe disjunkt sind. Es wird eine erste Scheduling-Request-Nachricht auf dem Uplink-Kanal von einer ersten straßenseitigen Netzwerkeinheit der ersten Gruppe empfangen. Es wird eine erste Scheduling-Grant-Nachricht ermittelt, wobei die erste Scheduling-Grant-Nachricht eine Zuweisung zumindest einer Sidelink-Ressource des ersten Sidelink-Kanals in dem nicht lizenzierten Frequenzbereich zu der ersten straßenseitigen Netzwerkeinheit der ersten Gruppe umfasst. Es wird die erste Scheduling-Grant-Nachricht auf einem Downlink-Kanal an die erste straßenseitige Netzwerkeinheit versendet. Es wird eine zweite Scheduling-Request-Nachricht auf dem Uplink-Kanal von einer zweiten straßenseitigen Netzwerkeinheit der zweiten Gruppe empfangen. Es wird eine zweite Scheduling-Grant-Nachricht ermittelt, wobei die zweite Scheduling-Grant-Nachricht eine Zuweisung zumindest einer Sidelink-Ressource des zweiten Sidelink-Kanals in dem lizenzierten Frequenzbereich zu der zweiten straßenseitigen Netzwerkeinheit der zweiten Gruppe umfasst. Es wird die zweiten Scheduling-Grant-Nachricht auf dem Downlink-Kanal an die zweite straßenseitige Netzwerkeinheit versendet.

Vorteilhaft wird gemäß dem fünften und sechsten Aspekt die Zuverlässigkeit einer Übertragung einer Nachricht über einen Sidelink-Kanal verbessert, da die Einteilung der straßenseitigen Netzwerkeinheiten in zwei Gruppen eine Verteilung des Verkehrs auf den ersten und zweiten Sidelink-Kanal umfasst. Durch das Gruppieren in die zweite Gruppe werden straßenseitige Netzwerkeinheiten von dem ersten Sidelink-Kanal abgezogen und geben Ressourcen für weitere Netzwerkeinheiten, welche nicht von der netzwerkinfrastrukturseitigen Netzwerkeinheit gesteuert werden, also beispielsweise ITS-G5-Netzwerkeinheiten, frei.

Allen Aspekten gemein ist, dass der Verkehr zwischen den Netzwerkeinheiten, welche von der netzwerkinfrastrukturseitigen Netzwerkeinheit gescheduled werden, über zwei Sidelink-Kanäle verteilt wird.

Weitere Merkmale und Vorteile finden sich in der nachfolgenden Beschreibung von Ausführungsbeispielen. In der Zeichnung zeigen:
- Figur 1: ein erstes zell-basiertes Drahtloskommunikationsnetzwerk und ein zweites Drahtloskommunikationsnetzwerk;
- Figuren 2, 3, 5, 8 und 9: jeweils ein schematisches Ablaufdiagramm;
- Figuren 4 und 6: jeweils ein schematisches Sequenzdiagramm; und
- Figur 7: ein schematisches Blockdiagramm zur Ermittlung einer Kollisionswahrscheinlichkeit.

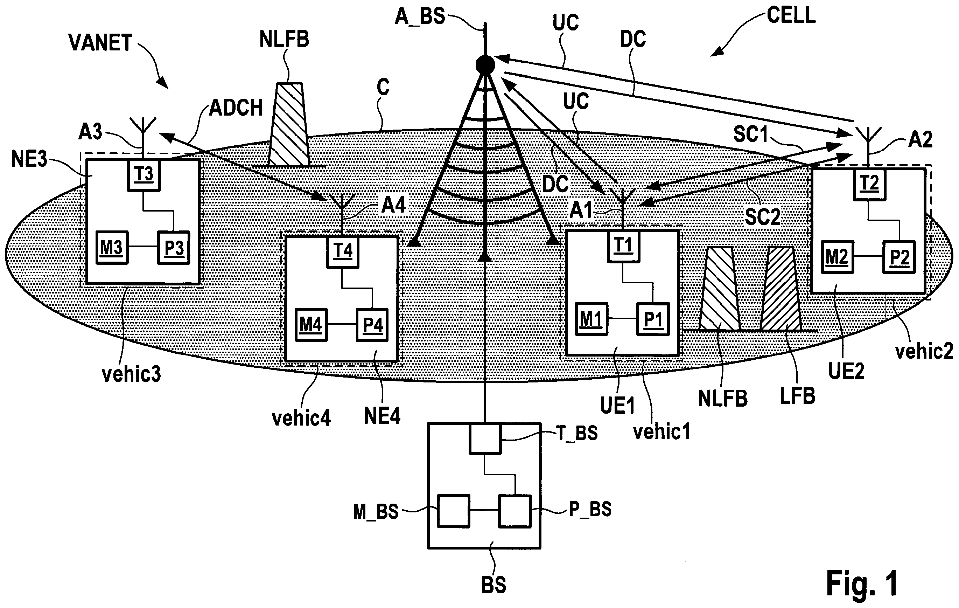

Figur 1 zeigt ein erstes zell-basiertes Drahtloskommunikationsnetzwerk CELL und ein zweites Drahtloskommunikationsnetzwerk VANET. Das erste Drahtloskommunikationsnetzwerk CELL umfasst eine netzwerkinfrastrukturseitige Netzwerkeinheit BS, eine erste straßenseitige Netzwerkeinheit UE1 und eine zweite staßenseitige Netzwerkeinheit UE2. Die netzwerkinfrastrukturseitige Netzwerkeinheit BS umfasst einen Prozessor P_BS, ein Speicherelement M_BS, und einen Transceiver T_BS. Die netzwerkinfrastrukturseitige Netzwerkeinheit BS ist auch als Basisstation oder eNodeB bezeichenbar. Die netzwerkinfrastrukturseitige Netzwerkeinheit BS ist mit einer stationären Antenne A_BS verbunden, um Daten auf einem Downlink-Kanal DC zu senden und Daten auf einem Uplink-Kanal UC zu empfangen. Die Antenne A_BS umfasst beispielsweise eine Anzahl von Antennen und ist beispielsweise als Remote Radio Head, RRH, ausgeführt. Die netzwerkinfrastrukturseitige Netzwerkeinheit BS und die Antenne A_BS stellen eine Zelle C bereit, innerhalb derer die straßenseitigen Netzwerkeinheiten UE1 und UE2 mit der Netzwerkeinheit BS kommunizieren. Selbstverständlich kann die netzwerkinfrastrukturseitige Netzwerkeinheit BS im Rahmen einer Virtualisierung auch verteilt aufgebaut sein und aus vereinzelten Netzwerkeinheiten bestehen. Die Netzwerkeinheiten BS. UE1 und UE2 sind beispielsweise nach dem LTE-V2X Standard konfiguriert.

Die straßenseitigen Netzwerkeinheiten UE1 und UE2 umfassen jeweils einen Prozessor P1, P2, ein Speicherlement M1, M2, einen Transceiver T1, T2 und eine Antenne A1, A2. Die beiden straßenseitigen Netzwerkeinheiten UE1, UE2 befinden sich innerhalb der Zelle C, empfangenen Daten auf dem Downlink-Kanal DC und versenden Daten auf dem Uplink-Kanal UC. Die beiden straßenseitigen Netzwerkeinheiten UE1, UE2 können direkt miteinander über einen ersten Sidelink-Kanal SC1 in einem nicht-lizenzierten Frequenzbereich NLFB und über einen zweiten Sidelink-Kanal SC2 in einem lizenzierten Frequenzbereich LFB kommunizieren.

Die beiden straßenseitigen Netzwerkeinheiten UE1, UE2 befinden sich innerhalb der Zelle C, und sind fähig, Daten auf dem Downlink-Kanal DC zu empfangen und Daten auf dem Uplink-Kanal UC zu versenden. Die beiden straßenseitigen Netzwerkeinheiten UE1, UE2 sind fähig direkt miteinander über einen Sidelink-Kanal SC1 in einem nicht-lizenzierten Frequenzbereich NLFB und über einen Sidelink-Kanal SC2 in einem lizenzierten Frequenzbereich LFB zu kommunizieren.

Nationale Behörden wie beispielsweise die Bundesnetzagentur der Bundesrepublik Deutschland erstellen einen Frequenznutzungsplan, welcher beispielsweise Lizenzen für einen jeweiligen Netzbetreiber umfasst. Dem Netzbetreiber ist es im Rahmen der zugewiesenen Lizenz erlaubt, die Netzwerkinfrastruktur sowie Endgeräte in einem zugewiesenen, d. h. lizenzierten Frequenzbereich bzw. Frequenzspektrum zu nutzen. Im Gegensatz dazu gibt es Frequenzbereiche bzw. Frequenzspektren, welche keinem Netzbetreiber zugewiesen sind und unter gewissen Randbedingungen wie beispielsweise reduzierter sende-/Empfangsleistung frei nutzbar sind.

In dieser Beschreibung wird auf einen einzigen Uplink-Kanal und einen einzigen Downlink-Kanal Bezug genommen. Beispielsweise umfasst der Uplink-Kanal und der Downlink-Kanal jeweilige Unterkanäle, d. h. es können mehrere Kanäle im Uplink als auch im Downlink Verwendung finden. Gleiches gilt für die Sidelink-Kanäle SC1, SC2.

Das zweite Drahtloskommunikationsnetzwerk VANET umfasst zwei weitere straßenseitige Netzwerkeinheiten NE3 und NE4, welche jeweils einen Prozessor P3, P4, ein Speicherlement M3, M4, einen Transceiver T3, T4 und eine Antenne A3, A4 umfassen. Die Netzwerkeinheiten NE3 und NE4 sind beispielsweise nach dem Standard IEEE 802.11p konfiguriert. Die Netzwerkeinheiten NE3 und NE4 kommunizieren direkt miteinander über einen Adhoc-Kanal ADCH in dem nicht lizenzierten Frequenzbereich NLFB. Der Adhoc-Kanal ADCH wird über ein CSMA/CA-Protokoll (CSMA/CA: Carrier Sense Multiple Access/Collision Avoidance) von den Transceivern T3, T4 arbitriert.

Auf den Speicherelementen M1, M2, M3, M4 sind jeweilige Computerprogramme abgespeichert, die bei Ausführung auf dem jeweiligen Prozessor P1, P2, P3, P4 die in dieser Beschreibung offenbarten Verfahren realisieren. Alternativ sind die Prozessoren P1, P2, P3, P4 als ASIC realisiert.

Die dritte und vierte Netzwerkeinheit NE3 und NE4 befinden sich in der Nähe der beiden ersten und zweiten Netzwerkeinheiten UE1 und UE2 insbesondere innerhalb eines Bereichs der Zelle C, so dass die jeweilige Sendeleistung ausreicht, um eine Übertragung der Netzwerkeinheiten UE1 und UE2 in dem nicht lizenzierten Frequenzbereich NLFB zu stören. Mithin können sich Übertragungen auf den Kanälen ADCH und SC1 gegenseitig nachteilhaft beeinflussen. Ziel dieser Beschreibung ist es, diese gegenseitige nachteilhafte Beeinflussung zu reduzieren.

Die Sidelink-Kanäle SC1 und SC2 werden in einem sogenannten managed mode betrieben, was bedeutet, dass die Netzwerkeinheit BS die Übertragung auf den Sidelink-Kanälen SC1 und SC2 über entsprechende Nachrichten im Downlink-Kanal DC kontrolliert. Der Adhoc-Kanal ADCH wird hingegen nicht in einem managed mode betrieben. Die straßenseitigen Netzwerkeinheiten NE3, NE4 greifen also selbstständig auf den Adhoc-Kanal ADCH zu.

Die straßenseitigen Netzwerkeinheiten UE1, UE2, NE3 und NE4 sind in jeweiligen Kraftfahrzeugen vehic1, vehic2, vehic3, vehic4 angeordnet und mit einem jeweils dort angeordneten nicht gezeigten Steuergerät zum Datenaustausch verbunden. Alternativ sind die straßenseitigen Netzwerkeinheiten UE1, UE2, NE3 und NE4 Teil des Steuergeräts in dem jeweiligen Kraftfahrzeug vehic1, vehic2, vehic3, vehic4. In einer weiteren alternativen Ausführungsform sind die straßenseitigen Netzwerkeinheiten UE1, UE2, NE3 und NE4 anstatt in einem Kraftfahrzeug in einer feststehenden Infrastruktur wie beispielsweise einer Ampel angeordnet.

Die Sidelink-Kanäle SC1, SC2 und ein Sidelink im allgemeinen sind beispielsweise durch das Dokument 3GPP TS 36.300 V14.2.0 (2017-03) definiert, welches durch Bezugnahme in diese Beschreibung aufgenommen ist. Der Sidelink umfasst Sidelink Discovery, Sidelink-Kommunikation und V2X-Sidelink-Kommunikation zwischen den Netzwerkeinheiten UE1, UE2. Der Sidelink verwendet Uplink-Ressourcen und eine physikalische Kanalstruktur ähnlich wie die des Uplinks. Der Sidelink unterscheidet sich also vom Uplink in Bezug auf den physikalischen Kanal.

Der Sidelink ist auf einzelne Clusterübertragungen für die physikalischen Sidelink-Kanäle begrenzt. Weiterhin verwendet der Sidelink eine 1-Symbol-Lücke am Ende jedes Sidelink-Subframe. Für die V2X-Sidelink-Kommunikation werden PSCCH, Physical Sidelink Control Channel, und PSSCH, Physical Sidelink Shared Channel, im gleichen Subframe übertragen. Die Sidelink-Kanäle SC1, SC2 sind beispielsweise der PSSCH.

Die physikalische Schichtverarbeitung von Transportkanälen im Sidelink unterscheidet sich von der Uplink-Übertragung in den folgenden Schritten: Scrambling: Für PSDCH, Physical Sidelink Discovery Channel, und PSCCH ist das Scrambling nicht spezifisch für die Netzwerkeinheit; Modulation: 64 QAM und 256 QAM wird für den Sidelink nicht unterstützt (QAM: Quadrature amplitude modulation). Der PSCCH gibt Sidelink-Ressourcen und andere Übertragungsparameter an, die von der jeweiligen Netzwerkeinheit UE1, UE2 für den PSSCH verwendet werden.

Für die PSDCH-, PSCCH- und PSSCH-Demodulation werden Referenzsignale ähnlich den Uplink-Demodulationsreferenzsignalen im 4-ten Symbol des Slots im normalen CP, Cyclic Prefix, und im dritten Symbol des Slots im erweiterten CP übertragen. Die Sidelink-Demodulationsreferenzsignal-Sequenzlänge entspricht der Größe (Anzahl der Subcarrier) der zugeordneten Ressource. Für die V2X-Sidelink-Kommunikation werden Referenzsignale in den 3. und 6. Symbolen des ersten Slots und in den 2. und 5. Symbolen des zweiten Slots im CP übertragen. Für PSDCH und PSCCH werden Referenzsignale basierend auf einer festen Basissequenz, zyklischem Shift und orthogonalem Cover Code erzeugt. Für die V2X-Sidelink-Kommunikation wird der zyklische Shift für PSCCH zufällig bei jeder Übertragung ausgewählt.

Für Messungen des jeweiligen Sidelink-Kanals SC1, SC2 stehen auf der Seite der Netzwerkeinheiten UE1, UE2 folgende Möglichkeiten zur Verfügung: Empfangsleistung des Sidelink-Referenzsignals (S-RSRP); Empfangsleistung des Sidelink-Discovery-Referenzsignals (SD-RSRP); Empfangsleistung des PSSCH-Referenzsignals (PSSCH-RSRP); Signalstärkeindikator für Sidelink-Referenzsignale (S-RSSI).

Der Adhoc-Kanal ADCH und das Adhoc-Drahtloskommunikationsnetzwerk VANET sind beispielsweise durch den IEEE-Standard "802.11p-2010 - IEEE Standard for Information technology-- Local and metropolitan area networks-Specific requirements-- Part 11: Wireless LAN Medium Access Control (MAC) and Physical Layer (PHY) Specifications Amendment 6: Wireless Access in Vehicular Environments" definiert, welcher durch Bezugnahme in diese Beschreibung aufgenommen ist. IEEE 802.11p ist ein Standard zur Erweiterung des WLAN-Standards IEEE 802.11. Die Zielrichtung von IEEE 802.11p ist es, die WLAN-Technik in Personen-Kraftfahrzeugen zu etablieren und eine zuverlässige Schnittstelle für Anwendungen intelligenter Verkehrssysteme (engl. Intelligent Transport Systems, ITS) zu schaffen. IEEE 802.11p ist auch Basis für Dedicated Short Range Communication (DSRC) im Frequenzband von 5,85 bis 5,925 GHz. Um Verwechslungen mit der europäischen DSRC Version zu vermeiden, wird vor allem in Europa eher der Begriff ITS-G5 anstatt DSRC verwendet.

Das Dokument "ETSI EN 302 663 V1.2.0 (2012-11)", welches durch Bezugnahme in diese Beschreibung aufgenommen ist, beschreibt beiden untersten Schichten der ITS-G5-Technologie (ITS G5: Intelligent Transport Systems operating in the 5 GHz frequency band), die physikalische Schicht und die Datenverbindungsschicht. Die Transceiver TA1 und TA3 realisieren beispielsweise diese beiden untersten Schichten und korrespondierende Funktionen nach "ETSI TS 102 687 V1.1.1 (2011-07)", um den Adhoc-Kanal ADCH zu verwenden. Für die Verwendung des Adhoc -Kanals ADCH stehen in Europa die folgenden nicht lizenzierten Frequenzbereiche zur Verfügung, welche Teil des nicht-lizenzierten Frequenzbereichs NLFB sind: 1) ITS-G5A für sicherheitsrelevante Anwendungen im Frequenzbereich von 5,875 GHz bis 5,905 GHz; 2) ITS-G5B für nicht-sicherheitsrelevante Anwendungen im Frequenzbereich von 5.855 GHz bis 5.875 GHz; und 3) ITS-G5D für den Betrieb von ITS-Anwendungen im Frequenzbereich 5,905 GHz bis 5.925 GHz. ITS-G5 ermöglicht eine Kommunikation zwischen den zwei Netzwerkeinheiten UE1 und UE2 außerhalb des Kontextes einer Basistation. ITS-G5 ermöglicht den sofortigen Austausch von Datenrahmen und vermeidet einen Management-Overhead, der bei der Einrichtung eines Netzwerks verwendet wird.

Das Dokument "ETSI TS 102 687 V1.1.1 (2011-07)", welches durch Bezugnahme in diese Beschreibung aufgenommen ist, beschreibt für ITS-G5 einen "Decentralized Congestion Control Mechanisms". Der Adhoc-Kanal ADCH dient unter anderem dem Austausch von Daten betreffend die Verkehrssicherheit und die Verkehrseffizienz. Die Transceiver TA1 und TA3 realisieren beispielsweise die Funktionen, wie sie im Dokument "ETSI TS 102 687 V1.1.1 (2011-07)" beschrieben sind. Die Anwendungen und Dienstleistungen im ITS-G5 beruhen auf dem kooperativen Verhalten der straßenseitigen Netzwerkeinheiten, die das Adhoc-Netzwerk VANET (VANET: vehicular ad hoc network) bilden. Das Adhoc-Netzwerk VANET ermöglicht zeitkritische Straßenverkehrsanwendungen, bei denen ein schneller Informationsaustausch notwendig ist, um den Fahrer und/oder das Fahrzeug rechtzeitig zu warnen und zu unterstützen. Um eine ordnungsgemäße Funktion des Adhoc-Netzwerks VANET zu gewährleisten, wird "Decentralized Congestion Control Mechanisms" (DCC) für den Adhoc-Kanal ADCH von ITS-G5 verwendet. DCC hat Funktionen, die sich auf mehreren Schichten der ITS-Architektur befinden. Die DCC-Mechanismen beruhen auf Wissen über den Kanal. Die Kanalzustandsinformation wird durch Kanal-Sondierung gewonnen. Kanalzustandsinformationen können durch die Methoden TPC (transmit power control), TRC (transmit rate control) und TDC (transmit datarate control) gewonnen werden. Die Methoden ermitteln die Kanalzustandsinformation in Abhängigkeit von Empfangssignalpegelschwellen oder Präambelinformationen von detektierten Paketen.

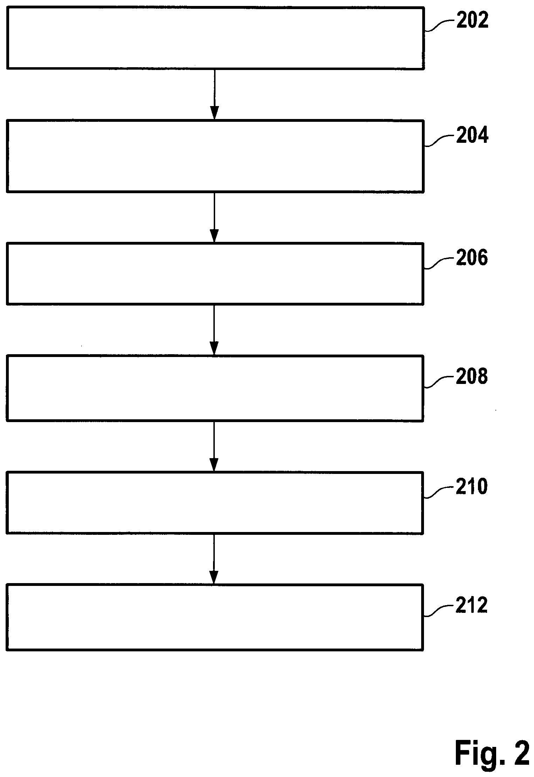

Figur 2 zeigt ein schematisches Ablaufdiagramm zum Betreiben der netzwerkinfrastrukturseitigen Netzwerkeinheit BS. In einem Schritt 202 wird eine Scheduling-Request-Nachricht für den ersten Sidelink-Kanal in dem nicht-lizenzierten Frequenzbereich auf dem Uplink-Kanal von einer der straßenseitigen Netzwerkeinheit empfangen. In einem Schritt 204 wird eine ersten Scheduling-Grant-Nachricht ermittelt, wobei die erste Scheduling-Grant-Nachricht eine Zuweisung zumindest einer Sidelink-Ressource des ersten Sidelink-Kanals zu der straßenseitigen Netzwerkeinheit umfasst. In einem Schritt 206 wird die ersten Scheduling-Grant-Nachricht auf dem Downlink-Kanal an die straßenseitige Netzwerkeinheit versendet. In einem Schritt 208 wird Indikation, dass die zugewiesene Sidelink-Ressource des ersten Sidelink-Kanals belegt ist, auf dem Uplink-Kanal von der straßenseitigen Netzwerkeinheit empfangen. In einem Schritt 210 wird eine zweite Scheduling-Grant-Nachricht ermittelt, wobei die zweite Scheduling-Grant-Nachricht eine Zuweisung zumindest einer Sidelink-Ressource des zweiten Sidelink-Kanals in dem lizenzierten Frequenzbereich zu der straßenseitigen Netzwerkeinheit umfasst. In einem Schritt 212 wird die zweite Scheduling-Grant-Nachricht auf dem Downlink-Kanal an die straßenseitige Netzwerkeinheit versendet.

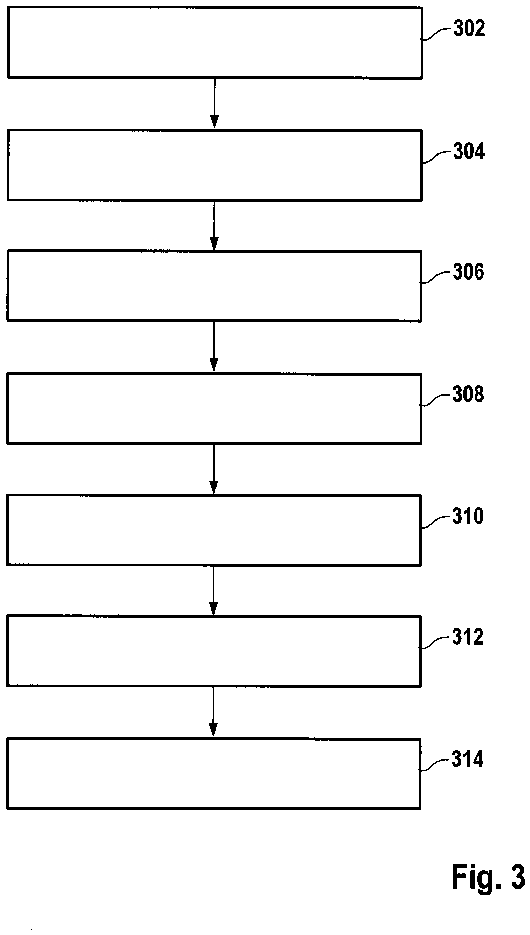

Figur 3 zeigt ein schematisches Ablaufdiagramm zum Betreiben der straßenseitigen Netzwerkeinheit UE1 oder UE2. In einem Schritt 302 wird eine Nachricht zum Versand an eine weitere straßenseitige Netzwerkeinheit ermittelt. In einem Schritt 304 wird eine Scheduling-Request-Nachricht für den ersten Sidelink-Kanal in dem nicht-lizenzierten Frequenzbereich auf dem Uplink-Kanal an die netzwerkinfrastrukturseitige Netzwerkeinheit versandt. In einem Schritt 306 wird die erste Scheduling-Grant-Nachricht auf dem Downlink-Kanal von der netzwerkinfrastrukturseitigen Netzwerkeinheit empfangen, wobei die erste Scheduling-Grant-Nachricht eine Zuweisung zumindest einer Sidelink-Ressource des ersten Sidelink-Kanals zu der straßenseitigen Netzwerkeinheit umfasst. In einem Schritt 308 wird ermittelt, dass die zugewiesene Sidelink-Ressource des ersten Sidelink-Kanals belegt ist. In einem Schritt 310 wird eine Indikation, dass die zugewiesene Sidelink-Ressource des ersten Sidelink-Kanals belegt ist, auf dem Uplink Kanal an die netzwerkinfrastrukturseitige Netzwerkeinheit versendet. In einem Schritt 312 wird die zweite Scheduling-Grant-Nachricht auf dem Downlink-Kanal von der netzwerkinfrastrukturseitigen Netzwerkeinheit empfangen, wobei die zweite Scheduling-Grant-Nachricht eine Zuweisung zumindest einer Sidelink-Ressource des zweiten Sidelink-Kanals zu der straßenseitigen Netzwerkeinheit umfasst. In einem Schritt 314 wird die Nachricht an die weitere straßenseitige Netzwerkeinheit auf dem zweiten Sidelink-Kanal versendet.

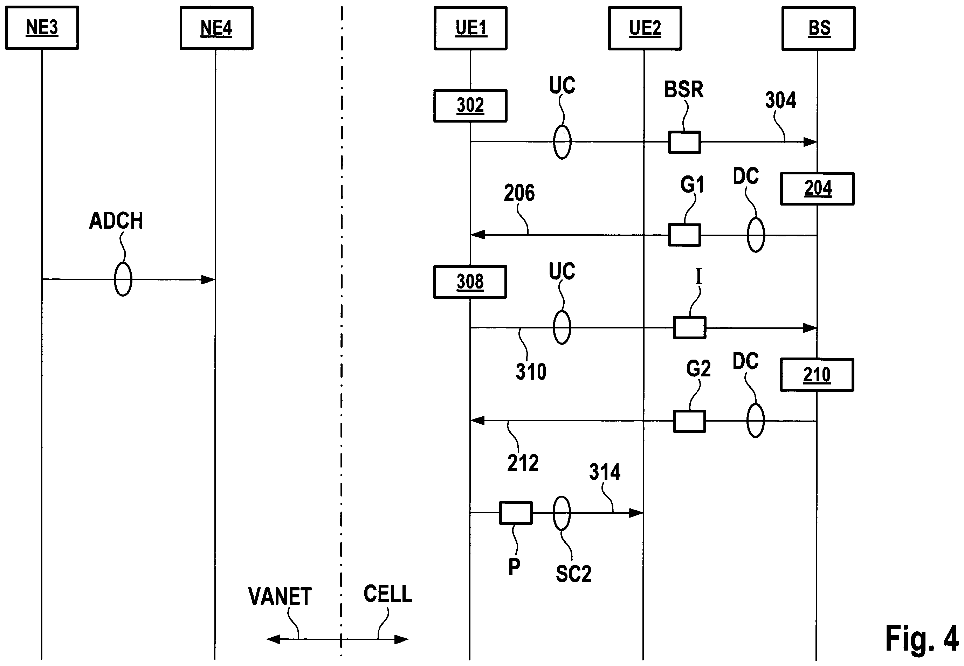

Figur 4 zeigt ein schematisches Sequenzdiagramm. In dem Schritt 302 wird von der straßenseitigen Netzwerkeinheit UE1 eine Nachricht P in Form von Nutzdaten ermittelt, um sie in einer geschedulten Ressourcen zu versenden. Die Scheduling-Request-Nachricht BSR, beispielsweise ein Buffer Status Report, wird über den Uplink-Kanal UC an die netzwerkinfrastrukturseitige Netzwerkeinheit BS versendet. Die netzwerkinfrastrukturseitige Netzwerkeinheit BS ermittelt in dem Schritt 204 die Scheduling-Grant-Nachricht G1, welche an die erste Netzwerkeinheit UE1 auf dem Downlink-Kanal DC versendet wird. Nach Erhalt der Scheduling-Grant-Nachricht G1 versucht die Netzwerkeinheit UE1 in dem Schritt 308 gemäß einem Listen-Before-Talk-Verfahren (LBT) die Nachricht P abzusetzen. Stellt die Netzwerkeinheit UE1 fest, dass der erste Sidelink-Kanal frei ist, so sendet sie die Nachricht P über die zugewiesene Ressource des ersten Sidelink-Kanals. Hierzu wird die Netzwerkeinheit UE1 den ersten Sidelink-Kanal ab, um zu ermitteln, ob dieser belegt ist oder nicht.

Unter einer Ressource ist in dieser Beschreibung eine Zeit-, Frequenz-, und/oder eine Modulation-and-Coding-Scheme-Information zu verstehen, welche zur Übertraung auf einem der Kanäle genutzt und zuvor von der netzwerkinfrastrukturseitigen Netzwerkeinheit gescheduled wird.

Findet zum Zeitpunkt des Kanalabhörens durch die Netzwerkeinheit UE1 eine Kommunikation zwischen den Netzwerkeinheiten NE3 und NE4 über den Adhoc-Kanal ADCH im gleichen Frequenzbereich statt, so nimmt die Netzwerkeinheit UE1 durch die Kanalmessung an, dass der auf dem gleichen Frequenzbereich befindliche erste Sidelink-Kanal besetzt ist. Die Indikation I, die beispielsweise als Bitinformation vorliegt, zeigt an, dass die erste straßenseitige Netzwerkeinheit UE1 die ihr zugewiesenen Ressourcen nicht nutzen konnte. Über den Uplink-Kanal UC wird die Indikation I im Schritt 310 an die netzwerkinfrastrukturseitige Netzwerkeinheit BS gesendet. In Abhängigkeit von der Indikation I ermittelt die netzwerkinfrastrukturseitige Netzwerkeinheit BS in dem Schritt 210 die zweite Grant-Scheduling-Nachricht G2 und übermittelt diese über den Downlink-Kanal DC an die erste straßenseitige Netzwerkeinheit UE1. In dem Schritt 314 versendet die erste straßenseitige Netzwerkeinheit UE1 die Nachricht P mit erhöhter Zuverlässigkeit über die zugewiesene Ressourcen des zweiten Sidelink-Kanals SC2, da der zweite Sidelink-Kanal SC2 sich in dem lizenzierten Frequenzbereich LSB befindet und somit keine Störungen von anderen nichtgeschedulten Netzwerkeinheiten zu erwarten sind. Mithin wird der zweite Sidelink-Kanal SC2 als Backup-Kanal für den ersten Sidelink-Kanal benutzt.

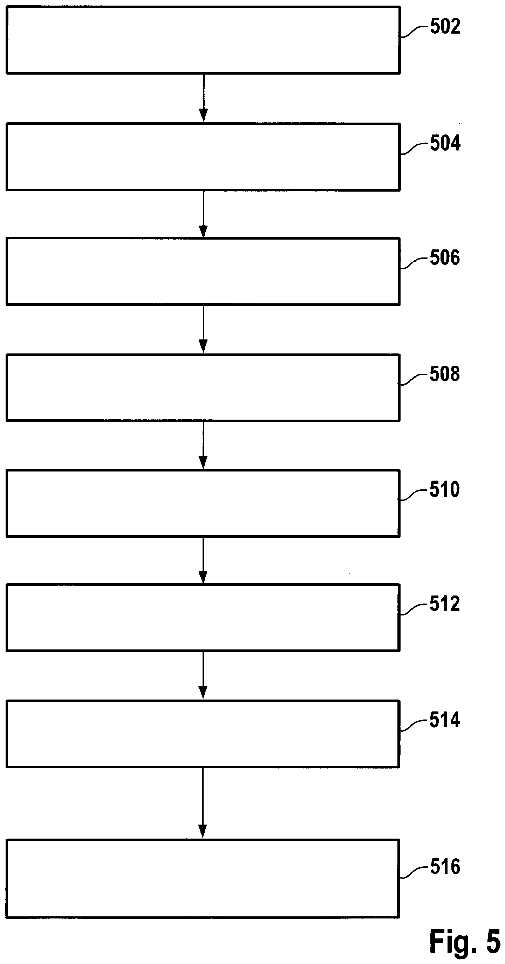

Figur 5 zeigt ein schematisches Ablaufdiagramm zum Betreiben der netzwerkinfrastrukturseitigen Netzwerkeinheit BS aus Figur 1. In einem Schritt 502 wird eine erste Gruppe von straßenseitigen Netzwerkeinheiten innerhalb der Zelle der netzwerkinfrastrukturseitigen Netzwerkeinheit ermittelt. In einem Schritt 504 wird eine zweite Gruppe von straßenseitigen Netzwerkeinheiten innerhalb der Zelle der netzwerkinfrastrukturseitigen Netzwerkeinheit ermittelt, wobei die erste und die zweite Gruppe disjunkt sind. In einem Schritt 506 wird eine erste Scheduling-Request-Nachricht auf dem Uplink-Kanal von einer ersten straßenseitigen Netzwerkeinheit der ersten Gruppe empfangen. In einem Schritt 508 wird eine erste Scheduling-Grant-Nachricht ermittelt, wobei die erste Scheduling-Grant-Nachricht eine Zuweisung zumindest einer Sidelink-Ressource des ersten Sidelink-Kanals in dem nicht lizenzierten Frequenzbereich zu der ersten straßenseitigen Netzwerkeinheit der ersten Gruppe umfasst. In einem Schritt 510 wird die erste Scheduling-Grant-Nachricht auf einem Downlink-Kanal an die erste straßenseitige Netzwerkeinheit versendet. In einem Schritt 512 wird eine zweite Scheduling-Request-Nachricht auf dem Uplink-Kanal von einer zweiten straßenseitigen Netzwerkeinheit der zweiten Gruppe empfangen. In einem Schritt 514 wird eine zweite Scheduling-Grant-Nachricht ermittelt, wobei die zweite Scheduling-Grant-Nachricht eine Zuweisung zumindest einer Sidelink-Ressource des zweiten Sidelink-Kanals in dem lizenzierten Frequenzbereich zu der zweiten straßenseitigen Netzwerkeinheit der zweiten Gruppe umfasst. In einem Schritt 516 wird die zweiten Scheduling-Grant-Nachricht auf dem Downlink-Kanal an die zweite straßenseitige Netzwerkeinheit versendet.

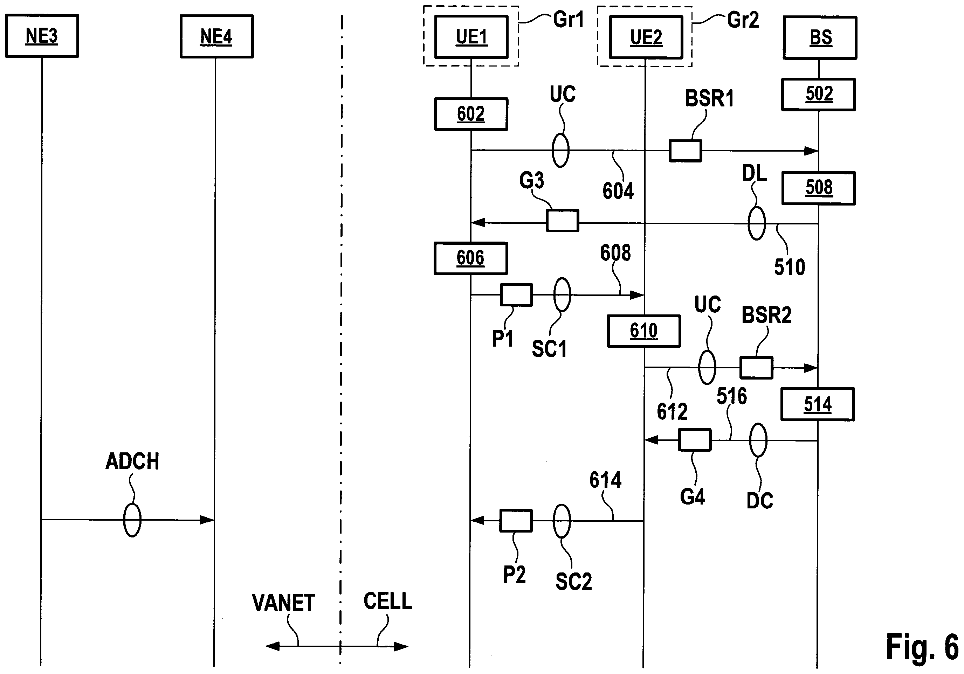

Figur 6 zeigt ein schematisches Sequenzdiagramm. In dem Schritt 502 teilt die Netzwerkeinheit BS die straßenseitigen Netzwerkeinheit UE1 und UE2 in eine jeweilige Gruppe Gr1, Gr2 ein. Selbstverständlich umfassen die Gruppen Gr1 und Gr2 noch weitere straßenseitige Netzwerkeinheiten. In einem Schritt 602 ermittelt die straßenseitige Netzwerkeinheit UE1 Nutzdaten P1 zum Versand an die zweite straßenseitige Netzwerkeinheit UE2 und übermittelt in einem Schritt 604 hierzu die erste Scheduling-Request-Nachricht BSR1 auf dem Uplink-Kanal UC an die netzwerkinfrastrukturseitige Netzwerkeinheit BS. Die Netzwerkeinheit BS ermittelt in dem Schritt 508 die erste Scheduling-Grant-Nachricht G3, um diese im Schritt 510 auf dem Downlink-Kanal DC zu versenden. In einem Schritt Schritt 606 prüft die erste Netzwerkeinheit UE1, ob der erste. Sidelink-Kanal SC1 frei ist. Vorliegend ist dies der Fall und die erste Netzwerkeinheit UE1 versendet in einem Schritt 608 die Nutzdaten P1 auf dem ersten Sidelink-Kanal SC1 des nicht lizenzierten Frequenzbereichs an die zweite straßenseitige Netzwerkeinheit UE2.

Die zweite straßenseitige Netzwerkeinheit UE2 ermittelt in einem Schritt 610 Nutzdaten P2, um diese an die erste straßenseitige Netzwerkeinheit UE1 zu versenden. Hierzu versendet sie in einem Schritt 612 die zweite Scheduling-Request-Nachricht BSR2 über den Uplink-Kanal UC an die netzwerkinfrastrukturseitige Netzwerkeinheit BS. In dem Schritt 514 ermittelt die Netzwerkeinheit BS in Abhängigkeit von der zweiten Scheduling-Request-Nachricht BSR2 die zweite Scheduling-Grant-Nachricht G4 für den zweiten Sidelink-Kanal SC2 und versendet diese in dem Schritt 516 an die zweite straßenseitige Netzwerkeinheit UE2. Nach Erhalt der zweiten Scheduling-Grant-Nachricht G4 führt die zweite straßenseitige Netzwerkeinheit UE2 kein Listen-Before-Talk-Verfahren durch, sondern versendet in einem Schritt 614 die Nutzdaten P2 auf der durch die zweite Scheduling-Grant-Nachricht G4 zugewiesene Ressourcen auf dem zweiten Sidelink-Kanal SC2 an die erste straßenseitige Netzwerkeinheit UE1. Eine gleichzeitige Drahtloskommunikation zwischen den straßenseitigen Netzwerkeinheiten NE3 und NE4 auf dem Adhoc-Kanal ADCH stört die Kommunikation gemäß dem Schritt 614 nicht, da sich die Frequenzbereiche des Adhoc-Kanals ADCH und des zweiten Sidelink-Kanals SC2 unterscheiden.

Sowohl die erste als auch die zweite straßenseitige Netzwerkeinheit UE1 und UE2 empfangen die Scheduling-Grant-Nachrichten G3 und G4 und sind entsprechend sowohl auf dem ersten als auf dem zweiten Sidelink-Kanal SC1 und SC2 empfangsbereit.

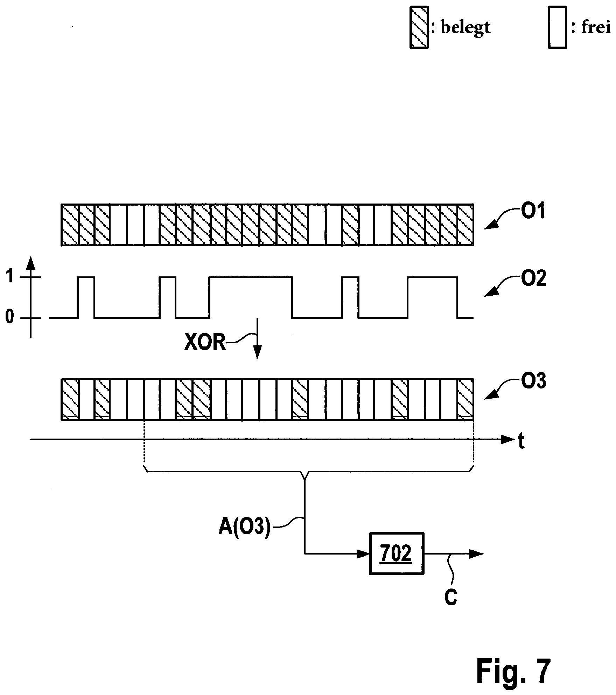

Figur 7 zeigt ein schematisches Blockdiagramm zur Ermittlung einer Kollisionswahrscheinlichkeit C auf dem ersten Sidelink-Kanal SC1 aus Figur 1. Durch eine Kanalmessung der netzwerkinfrastrukturseitigen Netzwerkeinheit BS auf dem ersten Sidelink-Kanal wird eine erste Belegungsinformation O1 ermittelt. In der ersten Belegungsinformation O1 ist die Information enthalten, dass auf dem ersten Sidelink-Kanal potentieller Datenverkehr passiert, der sowohl von dem zell-basierten Drahtloskommunikationsnetzwerk CELL als auch von dem zweiten Drahtloskommunikationsnetzwerk VANET stammen kann. Des Weiteren ist durch den Scheduler der netzwerkinfrastrukturseitigen Netzwerkeinheit BS eine zweite Belegungsinformation O2 bekannt, welche die auf den ersten Sidelink-Kanal geschedulten d. h. belegten Ressourcen enthält. Die zweite Belegungsinformation O2 liegt beispielsweise als Bitinformation vor, wobei Null einen freien Zustand und Eins einen belegten Zustand des ersten Sidelink-Kanals bedeutet. Mit einer Exklusiv-Oder-Operation O1 XOR O2 erhält man eine dritte Belegungsinformation O3. Die 3. Belegungsinformation O3 entspricht einer Belegung des ersten Sidelink-Kanals durch straßenseitigen Netzwerkeinheiten NE3, NE4, welche nicht in dem zellbasierten Drahtloskommunikationsnetzwerk operieren, also beispielsweise Verkehr nach ETSI ITS-G5.

Folglich lässt sich die Kollisionswahrscheinlichkeit C in Abhängigkeit von der dritten Belegungsinformation O3 ermitteln. Beispielsweise wird ein Abschnitt A(O3) aus der Belegungsinformation O3 ausgewählt und gemäß dem Block 702 die Kollisionswahrscheinlichkeit C ermittelt, welche sich beispielhaft bei 5 belegten von 20 Zeitschlitzen zu 25% ergibt.

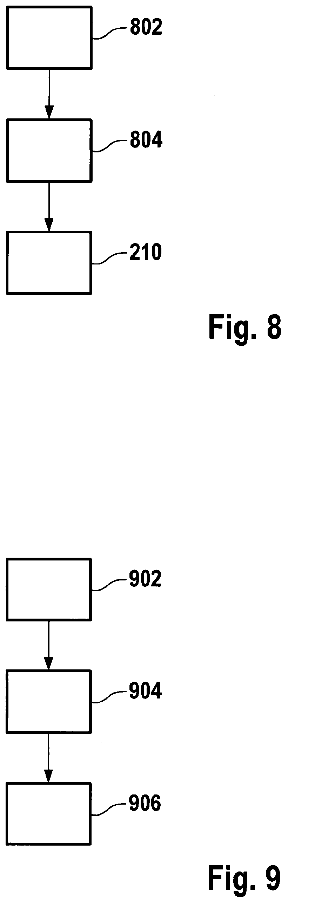

Figur 8 zeigt ein schematisches Ablaufdiagramm zum Betrieb der netzwerkinfrastrukturseitigen Netzwerkeinheit BS. In einem Schritt 802 wird die Kollisionswahrscheinlichkeit auf dem ersten Sidelink-Kanal in dem nicht lizenzierten Frequenzbereich beispielsweise nach Figur 7 ermittelt. In einem Schritt 804 werden in Abhängigkeit von der ermittelten Kollisionswahrscheinlichkeit Sidelink-Ressourcen auf dem zweiten Sidelink-Kanal reserviert. Wurde beispielsweise eine Kollisionswahrscheinlichkeit von 20 % ermittelt und sind eine Anzahl von 10 straßenseitigen Netzwerkeinheiten des zell-basierten Drahtlosnetzwerks in der Zelle vorhanden, so werden beispielsweise eine Anzahl von zwei Ressourcen auf dem zweiten Sidelink-Kanal reserviert. In dem Schritt 210 wird zumindest ein Teil der reservierten Sidelink-Ressourcen gescheduled, d. h. eine Sidelink-Ressource des zweiten Sidelink-Kanals wird der straßenseitigen Netzwerkeinheit zugewiesen, welche in dem ersten Sidelink-Kanal ihre Daten nicht absetzen konnte.

Die ermittelten reservierten und/oder geschedulten Ressourcen im ersten und zweiten Sidelink-Kanal werden von der netzwerkinfrastrukturseitigen Netzwerkeinheit BS beispielsweise mittels Broadcast, insbesondere mittels Radio Ressource Control-Nachrichten, an die erste und zweite Netzwerkeinheit UE1 und UE2 verteilt. Dies kann zusätzlich während eines Cell-Attachment-Vorgangs, eines Handover-Vorgangs der straßenseitigen Netzwerkeinheit UE1, UE2 geschehen
Figur 9 zeigt ein schematisches Ablaufdiagramm zum Betrieb der netzwerkinfrastrukturseitigen Netzwerkeinheit BS. In dem Schritt 902 wird die Kollisionswahrscheinlichkeit auf dem ersten Sidelink-Kanal beispielsweise nach Figur 7 ermittelt. In einem Schritt 904 wird die erste Gruppe von straßenseitigen Netzwerkeinheiten innerhalb der Zelle in Abhängigkeit von der ermittelten Kollisionswahrscheinlichkeit ermittelt. In einem Schritt 906 wird die zweite Gruppe von straßenseitigen Netzwerk Eigenheiten innerhalb der Zelle in Abhängigkeit von der ermittelten Kollisionswahrscheinlichkeit ermittelt. So erfolgt eine Anpassung der Gruppen an den Belegungsgrad des ersten Sidelink-Kanals.

Beispielsweise war zu einem ersten Zeitpunkt die Kollisionswahrscheinlichkeit bei 0 % und eine Anzahl von zehn straßenseitigen Netzwerkeinheiten war der ersten Gruppe zum Senden auf dem ersten Sidelink-Kanal im nicht lizenzierten Frequenzbereich zugeordnet. Steigt nun zu einem zweiten Zeitpunkt die Kollisionswahrscheinlichkeit auf 20 %, so wird eine Anzahl von zwei straßenseitigen Netzwerkeinheiten der zweiten Gruppe zum Senden auf dem zweiten Sidelink-Kanal im lizenzierten Frequenzbereich zugeordnet. Eine Anzahl von acht Netzwerkeinheiten wird der ersten Gruppe zugeordnet. Sinkt die Kollisionswahrscheinlichkeit anschließend wieder, so werden die straßenseitigen Netzwerkeinheiten aus der zweiten Gruppe in die erste Gruppe transferiert. Somit wird gewährleistet, dass der erste Sidelink-Kanal im nicht lizenzierten Frequenzbereich möglichst voll ausgelastet wird.

## Patentansprüche

1. Ein Verfahren zum Betreiben einer netzwerkinfrastrukturseitigen Netzwerkeinheit (BS) eines zell-basierten Drahtloskommunikationsnetzwerks (CELL), das Verfahren umfassend:
- Empfangen (202) einer Scheduling-Request-Nachricht (BSR) für einen ersten Sidelink-Kanal (SC1) in einem nicht-lizenzierten Frequenzbereich (NLFB) auf einem Uplink-Kanal (UC) von einer straßenseitigen Netzwerkeinheit (UE1);
- Ermitteln (204) einer ersten Scheduling-Grant-Nachricht (G1), wobei die erste Scheduling-Grant-Nachricht (G1) eine Zuweisung zumindest einer Sidelink-Ressource des ersten Sidelink-Kanals (SC1) zu der straßenseitigen Netzwerkeinheit (UE1) umfasst;
- Versenden (206) der ersten Scheduling-Grant-Nachricht (G1) auf einem Downlink-Kanal (DC) an die straßenseitige Netzwerkeinheit (UE1);
- Empfangen (208) einer Indikation (I), dass die zugewiesene Sidelink-Ressource des ersten Sidelink-Kanals (SC1) belegt ist, auf dem Uplink-Kanal (UC) von der straßenseitigen Netzwerkeinheit (UE1);
das Verfahren **gekennzeichnet durch**:
- Ermitteln (210) einer zweiten Scheduling-Grant-Nachricht (G2), wobei die zweite Scheduling-Grant-Nachricht (G2) eine Zuweisung zumindest einer Sidelink-Ressource eines zweiten Sidelink-Kanals (SC2) in einem lizenzierten Frequenzbereich (LFB) zu der straßenseitigen Netzwerkeinheit (UE1) umfasst; und
- Versenden (212) der zweiten Scheduling-Grant-Nachricht (G2) auf dem Downlink-Kanal (DC) an die straßenseitige Netzwerkeinheit (UE1).

2. Das Verfahren nach dem Anspruch 1 umfassend:
- Reservieren (804) von Sidelink-Ressourcen auf dem zweiten Sidelink-Kanal (SC2) in dem lizenzierten Frequenzbereich (LFB).

3. Das Verfahren nach dem Anspruch 1 oder 2 umfassend:
- Ermitteln (802) einer Kollisionswahrscheinlichkeit auf dem ersten Sidelink-Kanal (SC1) in dem nicht-lizenzierten Frequenzbereich (NLFB); und
- Reservieren (804) der Sidelink-Ressourcen auf dem zweiten Sidelink-Kanal (SC2) in dem lizenzierten Frequenzbereich (LFB) in Abhängigkeit von der Kollisionswahrscheinlichkeit

4. Eine netzwerkinfrastrukturseitige Netzwerkeinheit (BS) eines zell-basierten Drahtloskommunikationsnetzwerks (CELL) umfassend:
- eine Antenne (A_BS) und einen Transceiver (T_BS), welche dazu eingerichtet sind, eine Scheduling-Request-Nachricht (BSR) für einen ersten Sidelink-Kanal (SC1) in einem nicht-lizenzierten Frequenzbereich (NLFB) auf einem Uplink-Kanal (UC) von einer straßenseitigen Netzwerkeinheit (UE1) zu empfangen;
- einen Prozessor (P_BS), welcher dazu eingerichtet ist, eine erste Scheduling-Grant-Nachricht (G1) zu ermitteln, wobei die erste Scheduling-Grant-Nachricht (G1) eine Zuweisung zumindest einer Sidelink-Ressource des ersten Sidelink-Kanals (SC1) zu der straßenseitigen Netzwerkeinheit (UE1) umfasst;
- wobei die Antenne (A_BS) und der Transceiver (T_BS) dazu eingerichtet sind, die erste Scheduling-Grant-Nachricht (G1) auf einem Downlink-Kanal (DC) an die straßenseitige Netzwerkeinheit (UE1) zu versenden , und eine Indikation (I), dass die zugewiesene Sidelink-Ressource des ersten Sidelink-Kanals (SC1) belegt ist, auf dem (UC) von der straßenseitigen Netzwerkeinheit (UE1) zu empfangen; **dadurch gekennzeichnet, dass**:
- der Prozessor (P_BS) dazu eingerichtet ist, eine zweite Scheduling-Grant-Nachricht (G2) zu ermitteln, wobei die zweite Scheduling-Grant-Nachricht (G2) eine Zuweisung zumindest einer Sidelink-Ressource eines zweiten Sidelink-Kanals (SC2) in einem lizenzierten Frequenzbereich (LFB) zu der straßenseitigen Netzwerkeinheit (UE1) umfasst; und
- die Antenne (A_BS) und der Transceiver (T_BS) dazu eingerichtet sind, die zweite Scheduling-Grant-Nachricht (G2) auf dem Downlink-Kanal (DC) an die straßenseitige Netzwerkeinheit (UE1) zu versenden.

5. Ein Verfahren zum Betreiben einer straßenseitigen Netzwerkeinheit (UE1) eines zell-basierten Drahtloskommunikationsnetzwerks (CELL), das Verfahren umfassend:
- Ermitteln (302) einer Nachricht (P) zum Versand an eine weitere straßenseitige Netzwerkeinheit (UE2);
- Versenden (304) einer Scheduling-Request-Nachricht (BSR) für einen ersten Sidelink-Kanal (SC1) in einem nicht-lizenzierten Frequenzbereich (NLFB) auf einem Uplink-Kanal (UC) an eine netzwerkinfrastrukturseitige Netzwerkeinheit (BS);
- Empfangen (306) einer ersten Scheduling-Grant-Nachricht (G1) auf einem Downlink-Kanal (DC) von der netzwerkinfrastrukturseitigen Netzwerkeinheit (BS), wobei die erste Scheduling-Grant-Nachricht (G1) eine Zuweisung zumindest einer Sidelink-Ressource des ersten Sidelink-Kanals (SC1) zu der straßenseitigen Netzwerkeinheit (UE1) umfasst;
- Ermitteln (308), dass die zugewiesene Sidelink-Ressource des ersten Sidelink-Kanals (SC1) belegt ist;
- Versenden (310) einer Indikation (I), dass die zugewiesene Sidelink-Ressource des ersten Sidelink-Kanals (SC1) belegt ist, auf dem Uplink Kanal (UC) an die netzwerkinfrastrukturseitige Netzwerkeinheit;
das Verfahren **gekennzeichnet durch**:
- Empfangen (312) einer zweiten Scheduling-Grant-Nachricht (G2) auf dem Downlink-Kanal (DC) von der netzwerkinfrastrukturseitigen Netzwerkeinheit (BS), wobei die zweite Scheduling-Grant-Nachricht (G2) eine Zuweisung zumindest einer Sidelink-Ressource des zweiten Sidelink-Kanals (SC2) zu der straßenseitigen Netzwerkeinheit (UE1) umfasst; und
- Versenden (314) der Nachricht (P) an die weitere straßenseitige Netzwerkeinheit (UE2) auf dem zweiten Sidelink-Kanal (SC2).

6. Ein Verfahren zum Betreiben eines zell-basierten Drahtloskommunikationsnetzwerks (CELL) gemäß einem der Ansprüche 1 bis 3 und dem Anspruch 5.

7. Eine straßenseitige Netzwerkeinheit (UE1) eines zell-basierten Drahtloskommunikationsnetzwerks (CELL) umfassend:
- einen Prozessor (P1), welcher dazu eingerichtet ist, eine Nachricht (P) zum Versand an eine weitere straßenseitige Netzwerkeinheit (UE2) zu ermitteln;
- eine Antenne (A1) und einen Transceiver (T1), welche dazu eingereichtet sind, eine Scheduling-Request-Nachricht (BSR) für einen ersten Sidelink-Kanal (SC1) in einem nicht-lizenzierten Frequenzbereich (NLFB) auf einem Uplink-Kanal (UC) an eine netzwerkinfrastrukturseitige Netzwerkeinheit (BS) zu versenden, und eine erste Scheduling-Grant-Nachricht (G1) auf einem Downlink-Kanal (DC) von der netzwerkinfrastrukturseitigen Netzwerkeinheit (BS) zu empfangen, wobei die erste Scheduling-Grant-Nachricht (G1) eine Zuweisung zumindest einer Sidelink-Ressource des ersten Sidelink-Kanals (SC1) zu der straßenseitigen Netzwerkeinheit (UE1) umfasst;
**dadurch gekennzeichnet, dass**:
- der Transceiver (T1) und/oder der Prozessor (P1) dazu eingerichtet sind, zu ermitteln , dass die zugewiesene Sidelink-Ressource des ersten Sidelink-Kanals (SC1) belegt ist;
- die Antenne (A1) und der Transceiver (T1) dazu eingerichtet sind, eine Indikation (I), dass die zugewiesene Sidelink-Ressource (PRB, MCS) des ersten Sidelink-Kanals (SC1) belegt ist, auf dem Uplink Kanal (UC) an die netzwerkinfrastrukturseitige Netzwerkeinheit (BS) zu versenden, eine zweite Scheduling-Grant-Nachricht (G2) auf dem Downlink-Kanal (DC) von der netzwerkinfrastrukturseitigen Netzwerkeinheit (BS) zu empfangen, wobei die zweite Scheduling-Grant-Nachricht (G2) eine Zuweisung zumindest einer Sidelink-Ressource des zweiten Sidelink-Kanals (SC2) zu der straßenseitigen Netzwerkeinheit (UE1) umfasst, und die Nachricht (P) an die weitere straßenseitige Netzwerkeinheit (UE2) auf dem zweiten Sidelink-Kanal (SC2) zu versenden.

8. Ein Kraftfahrzeug (vehic1) umfassend die straßenseitige Netzwerkeinheit (UE1) nach dem Anspruch 7.

## Claims

1. Method for operating a network-infrastructure network unit (BS) of a cell-based wireless communication network (CELL), the method comprising:
- receiving (202) a scheduling request message (BSR) for a first sidelink channel (SC1) in an unlicensed frequency band (NLFB) from a roadside network unit (UE1) on an uplink channel (UC),
- ascertaining (204) a first scheduling grant message (G1), the first scheduling grant message (G1) comprising an allocation of at least one sidelink resource of the first sidelink channel (SC1) to the roadside network unit (UE1),
- sending (206) the first scheduling grant message (G1) to the roadside network unit (UE1) on a downlink channel (DC);
- receiving (208) an indication (I) that the allocated sidelink resource of the first sidelink channel (SC1) is in use from the roadside network unit (UE1) on the uplink channel (UC),
the method **characterized by**:
- ascertaining (210) a second scheduling grant message (G2), the second scheduling grant message (G2) comprising an allocation of at least one sidelink resource of a second sidelink channel (SC2) in a licensed frequency band (LFB) to the roadside network unit (UE1); and
- sending (212) the second scheduling grant message (G2) to the roadside network unit (UE1) on the downlink channel (DC).

2. Method according to Claim 1, comprising:
- reserving (804) sidelink resources on the second sidelink channel (SC2) in the licensed frequency band (LFB).

3. Method according to Claim 1 or 2, comprising:
- ascertaining (802) a probability of collision on the first sidelink channel (SC1) in the unlicensed frequency band (NLFB); and
- reserving (804) the sidelink resources on the second sidelink channel (SC2) in the licensed frequency band (LFB) on the basis of the probability of collision.

4. Network-infrastructure network unit (BS) of a cell-based wireless communication network (CELL), comprising:
- an antenna (A_BS) and a transceiver (T_BS), which are configured to receive a scheduling request message (BSR) for a first sidelink channel (SC1) in an unlicensed frequency band (NLFB) from a roadside network unit (UE1) on an uplink channel (UC);
- a processor (P_BS), which is configured to ascertain a first scheduling grant message (G1), the first scheduling grant message (G1) comprising an allocation of at least one sidelink resource of the first sidelink channel (SC1) to the roadside network unit (UE1),
- wherein the antenna (A_BS) and the transceiver (T_BS) are configured to send the first scheduling grant message (G1) to the roadside network unit (UE1) on a downlink channel (DC), and to receive an indication (I) that the allocated sidelink resource of the first sidelink channel (SC1) is in use from the roadside network unit (UE1) on the uplink channel (UC); **characterized in that**:
- the processor (P_BS) is configured to ascertain a second scheduling grant message (G2), the second scheduling grant message (G2) comprising an allocation of at least one sidelink resource of a second sidelink channel (SC2) in a licensed frequency band (LFB) to the roadside network unit (UE1); and
- the antenna (A_BS) and the transceiver (T_BS) are configured to send the second scheduling grant message (G2) to the roadside network unit (UE1) on the downlink channel (DC).

5. Method for operating a roadside network unit (UE1) of a cell-based wireless communication network (CELL), the method comprising:
- ascertaining (302) a message (P) for sending to a further roadside network unit (UE2);
- sending (304) a scheduling request message (BSR) for a first sidelink channel (SC1) in an unlicensed frequency band (NLFB) to a network-infrastructure network unit (BS) on an uplink channel (UC);
- receiving (306) a first scheduling grant message (G1) from the network-infrastructure network unit (BS) on a downlink channel (DC), the first scheduling grant message (G1) comprising an allocation of at least one sidelink resource of the first sidelink channel (SC1) to the roadside network unit (UE1);
- ascertaining (308) that the allocated sidelink resource of the first sidelink channel (SC1) is in use;
- sending (310) an indication (I) that the allocated sidelink resource of the first sidelink channel (SC1) is in use to the network-infrastructure network unit on the uplink channel (UC);
the method **characterized by**:
- receiving (312) a second scheduling grant message (G2) from the network-infrastructure network unit (BS) on the downlink channel (DC), the second scheduling grant message (G2) comprising an allocation of at least one sidelink resource of the second sidelink channel (SC2) to the roadside network unit (UE1); and
- sending (314) the message (P) to the further roadside network unit (UE2) on the second sidelink channel (SC2).

6. Method for operating a cell-based wireless communication network (CELL) according to one of Claims 1 to 3 and Claim 5.

7. Roadside network unit (UE1) of a cell-based wireless communication network (CELL), comprising:
- a processor (P1), which is configured to ascertain a message (P) for sending to a further roadside network unit (UE2);
- an antenna (A1) and a transceiver (T1), which are configured to send a scheduling request message (BSR) for a first sidelink channel (SC1) in an unlicensed frequency band (NLFB) to a network-infrastructure network unit (BS) on an uplink channel (UC), and to receive a first scheduling grant message (G1) from the network-infrastructure network unit (BS) on a downlink channel (DC), the first scheduling grant message (G1) comprising an allocation of at least one sidelink resource of the first sidelink channel (SC1) to the roadside network unit (UE1);
**characterized in that**:
- the transceiver (T1) and/or the processor (P1) are configured to ascertain that the allocated sidelink resource of the first sidelink channel (SC1) is in use;
- the antenna (A1) and the transceiver (T1) are configured to send an indication (I) that the allocated sidelink resource (PRB, MCS) of the first sidelink channel (SC1) is in use to the network-infrastructure network unit (BS) on the uplink channel (UC), to receive a second scheduling grant message (G2) from the network-infrastructure network unit (BS) on the downlink channel (DC), the second scheduling grant message (G2) comprising an allocation of at least one sidelink resource of the second sidelink channel (SC2) to the roadside network unit (UE1), and to send the message (P) to the further roadside network unit (UE2) on the second sidelink channel (SC2).

8. Motor vehicle (vehic1) comprising the roadside network unit (UE1) according to Claim 7.

## Revendications

1. Procédé permettant de faire fonctionner une unité de réseau côté infrastructure de réseau (BS) d'un réseau de communication sans fil à base de cellules (CELL), le procédé comprenant les étapes consistant à :
- recevoir (202) un message de demande de planification (BSR) pour un premier canal de liaison latérale (SC1) dans une gamme de fréquences sans licence (NLFB) sur un canal de liaison montante (UC) en provenance d'une unité de réseau côté route (UE1) ;
- déterminer (204) un premier message d'autorisation de planification (G1), le premier message d'autorisation de planification (G1) comprenant une attribution d'au moins une ressource de liaison latérale du premier canal de liaison latérale (SC1) à l'unité de réseau côté route (UE1) ;
- envoyer (206) le premier message d'autorisation de planification (G1) sur un canal de liaison descendante (DC) à l'unité de réseau côté route (UE1) ;
- recevoir (208) une indication (I) que la ressource de liaison latérale attribuée du premier canal de liaison latérale (SC1) est occupée sur le canal de liaison montante (UC) en provenance de l'unité de réseau côté route (UE1) ;
le procédé étant **caractérisé par** les étapes consistant à :
- déterminer (210) un deuxième message d'autorisation de planification (G2), le deuxième message d'autorisation de planification (G2) comprenant une attribution d'au moins une ressource de liaison latérale d'un deuxième canal de liaison latérale (SC2) dans une gamme de fréquences avec licence (LFB) à l'unité de réseau côté route (UE1) ; et
- envoyer (212) le deuxième message d'autorisation de planification (G2) sur le canal de liaison descendante (DC) à l'unité de réseau côté route (UE1).

2. Procédé selon la revendication 1, comprenant l'étape consistant à :
- réserver (804) des ressources de liaison latérale sur le deuxième canal de liaison latérale (SC2) dans la gamme de fréquences avec licence (LFB).

3. Procédé selon la revendication 1 ou 2, comprenant les étapes consistant à :
- déterminer (802) une probabilité de collision sur le premier canal de liaison latérale (SC1) dans la gamme de fréquences sans licence (NLFB) ; et
- réserver (804) les ressources de liaison latérale sur le deuxième canal de liaison latérale (SC2) dans la gamme de fréquences avec licence (LFB) en fonction de la probabilité de collision.

4. Unité de réseau côté infrastructure de réseau (BS) d'un réseau de communication sans fil à base de cellules (CELL), comprenant :
- une antenne (A_BS) et un émetteur-récepteur (T_BS) qui sont aménagés pour recevoir un message de demande de planification (BSR) pour un premier canal de liaison latérale (SC1) dans une gamme de fréquences sans licence (NLFB) sur un canal de liaison montante (UC) en provenance d'une unité de réseau côté route (UE1) ;
- un processeur (P_BS) qui est aménagé pour déterminer un premier message d'autorisation de planification (G1), le premier message d'autorisation de planification (G1) comprenant une attribution d'au moins une ressource de liaison latérale du premier canal de liaison latérale (SC1) à l'unité de réseau côté route (UE1) ;
- l'antenne (A_BS) et l'émetteur-récepteur (T_BS) étant aménagés pour envoyer le premier message d'autorisation de planification (G1) sur un canal de liaison descendante (DC) à l'unité de réseau côté route (UE1), et pour recevoir une indication (I) que la ressource de liaison latérale attribuée du premier canal de liaison latérale (SC1) est occupée sur le canal de liaison montante (UC) en provenance de l'unité de réseau côté route (UE1) ;
**caractérisée en ce que** :
- le processeur (P_BS) est aménagé pour déterminer un deuxième message d'autorisation de planification (G2), le deuxième message d'autorisation de planification (G2) comprenant une attribution d'au moins une ressource de liaison latérale d'un deuxième canal de liaison latérale (SC2) dans une gamme de fréquences avec licence (LFB) à l'unité de réseau côté route (UE1) ; et
- l'antenne (A_BS) et l'émetteur-récepteur (T_BS) sont aménagés pour envoyer le deuxième message d'autorisation de planification (G2) sur le canal de liaison descendante (DC) à l'unité de réseau côté route (UE1).

5. Procédé permettant de faire fonctionner une unité de réseau côté route (UE1) d'un réseau de communication sans fil à base de cellules (CELL), le procédé comprenant les étapes consistant à :
- déterminer (302) un message (P) pour l'envoi à une autre unité de réseau côté route (UE2) ;
- envoyer (304) un message de demande de planification (BSR) pour un premier canal de liaison latérale (SC1) dans une gamme de fréquences sans licence (NLFB) sur un canal de liaison montante (UC) à une unité de réseau côté infrastructure de réseau (BS) ;
- recevoir (306) un premier message d'autorisation de planification (G1) sur un canal de liaison descendante (DC) en provenance de l'unité de réseau côté infrastructure de réseau (BS), le premier message d'autorisation de planification (G1) comprenant une attribution d'au moins une ressource de liaison latérale du premier canal de liaison latérale (SC1) à l'unité de réseau côté route (UE1) ;
- déterminer (308) que la ressource de liaison latérale attribuée du premier canal de liaison latérale (SC1) est occupée ;
- envoyer (310) une indication (I) que la ressource de liaison latérale attribuée du premier canal de liaison latérale (SC1) est occupée, sur le canal de liaison montante (UC) à l'unité de réseau côté infrastructure de réseau ;
le procédé étant **caractérisé par** les étapes consistant à :
- recevoir (312) un deuxième message d'autorisation de planification (G2) sur le canal de liaison descendante (DC) en provenance de l'unité de réseau côté infrastructure de réseau (BS), le deuxième message d'autorisation de planification (G2) comprenant une attribution d'au moins une ressource de liaison latérale du deuxième canal de liaison latérale (SC2) à l'unité de réseau côté route (UE1) ; et
- envoyer (314) le message (P) à l'autre unité de réseau côté route (UE2) sur le deuxième canal de liaison latérale (SC2).

6. Procédé permettant de faire fonctionner un réseau de communication sans fil à base de cellules (CELL) selon l'une quelconque des revendications 1 à 3 et la revendication 5.

7. Unité de réseau côté route (UE1) d'un réseau de communication sans fil à base de cellules (CELL) comprenant :
- un processeur (P1) qui est aménagé pour déterminer un message (P) pour l'envoi à une autre unité de réseau côté route (UE2) ;
- une antenne (A1) et un émetteur-récepteur (T1) qui sont aménagés pour envoyer un message de demande de planification (BSR) pour un premier canal de liaison latérale (SC1) dans une gamme de fréquences sans licence (NLFB) sur un canal de liaison montante (UC) à une unité de réseau côté infrastructure de réseau (BS), et pour recevoir un premier message d'autorisation de planification (G1) sur un canal de liaison descendante (DC) en provenance de l'unité de réseau côté infrastructure de réseau (BS), le premier message d'autorisation de planification (G1) comprenant une attribution d'au moins une ressource de liaison latérale du premier canal de liaison latérale (SC1) à l'unité de réseau côté route (UE1) ;
**caractérisée en ce que** :
- l'émetteur-récepteur (T1) et/ou le processeur (P1) sont aménagés pour déterminer que la ressource de liaison latérale attribuée du premier canal de liaison latérale (SC1) est occupée ;
- l'antenne (A1) et l'émetteur-récepteur (T1) sont aménagés pour envoyer une indication (I) que la ressource de liaison latérale attribuée (PRB, MCS) du premier canal de liaison latérale (SC1) est occupée sur le canal de liaison montante (UC) à l'unité de réseau côté infrastructure de réseau (BS), pour recevoir un deuxième message d'autorisation de planification (G2) sur le canal de liaison descendante (DC) en provenance de l'unité de réseau côté infrastructure de réseau (BS), le deuxième message d'autorisation de planification (G2) comprenant une attribution d'au moins une ressource de liaison latérale du deuxième canal de liaison latérale (SC2) à l'unité de réseau côté route (UE1), et pour envoyer le message (P) à l'autre unité de réseau côté route (UE2) sur le deuxième canal de liaison latérale (SC2).

8. Véhicule automobile (vehicl), comprenant l'unité de réseau côté route (UE1) selon la revendication 7.
